Europäisches Patentamt

European Patent Office

Office européen des brevets

(19)

(11) Veröffentlichungsnummer: **0 060 406**
**A1**

(12) **EUROPÄISCHE PATENTANMELDUNG**

(21) Anmeldenummer: **82101257.2**

(22) Anmeldetag: **19.02.82**

(51) Int. Cl.³: **A 01 D 53/00**

(30) Priorität: **16.03.81 DE 8107535 U**

(43) Veröffentlichungstag der Anmeldung: **22.09.82**
**Patentblatt 82/38**

(84) Benannte Vertragsstaaten: **AT BE CH LI NL**

(71) Anmelder: **Wolf-Geräte GmbH, Gregor-Wolf-Strasse Postfach 860 und 880, D-5240 Betzdorf/Sieg (DE)**

(72) Erfinder: **Kolb, Walter, Martin-Luther-Strasse 51, D-5240 Betzdorf/Sieg (DE)**
Erfinder: **Quack, Ewald, Am Steimelskopf, D-5249 Forst (DE)**

(74) Vertreter: **Koch, Günther, Dipl.-Ing. et al, Patentanwälte Dipl.-Ing. C. Wallach Dipl.-Ing. G. Koch, Dr. T. Haibach Dipl.-Ing. R. Feldkamp Kaufingerstrasse 8, D-8000 München 2 (DE)**

(54) **Rasenmäher mit Grasfangkorb.**

(57) Das Rasenmäher-Chassis ist mit einem Windkanal (1) versehen, der in einen schwenkbar eingehängten Grasfangkorb (2) mündet. Der Hauptluftstrom (HL), der durch die rotierenden Werkzeuge (4) erzeugt wird, verläuft oben im Windkanal, wodurch gewährleistet wird, daß das abgeschnittene Gras sehr weit in den Fangkorb (2) hineingefördert wird. Um den geringeren Anteil der am Boden des Windkanals nach hinten bewegten Grasteilchen in den Fangkorb (2) zu fördern, ist ein Leitblech (3) angeordnet, welches nach oben weist und die Grasteile in Richtung der Pfeile (P) in den Hauptluftstrom (HL) fördert. Der Einlauf des Grasfangkorbes (2) wird von einer Schütte (5) gebildet, deren Boden (6) einen Abstand zu der Hinterkante des Leitbleches (3) aufweist und unter dieser Kante liegt. Zwischen Hinterkante von Leitblech (3) und Vorderkante von Boden (6) befindet sich ein Zwischenraum, aus dem das Gras, nachdem der Korb (2) voll ist, herausfallen kann und anzeigt, daß der Korb voll ist.

- 1 -

Rasenmäher mit Grasfangkorb.

Die Erfindung bezieht sich auf einen Rasenmäher mit Grasfangkorb und einem Windkanal, durch den das Gras in einem durch die rotierenden Messer oder zusätzliche Luftschaufeln erzeugten Luftstrom nach hinten geführt wird.

Ein solcher Rasenmäher ist durch die DE-OS 30 33 345 bekannt.

Bei derartigen Rasenmähern besteht das Problem der Ablage des im Luftstrom mitgeführten Schnittgutes innerhalb des Grasfangkorbes. Insbesondere bei nassem Schnittgut kann es vorkommen, daß die Einlaßöffnung des Fangkorbes zugesetzt wird lang bevor der Grasfangkorb angefüllt ist.

Der Erfindung liegt daher die Aufgabe zugrunde ein optimales Fangergebnis auch bei nassem Rasen zu erzielen und dabei ein Verstopfen des Windkanals zu verhindern.

Gelöst wird die gestellte Aufgabe dadurch, daß der Windkanal am Boden ein Leitblech aufweist, welches nach hinten und oben ansteigend angeordnet ist.

Durch dieses Leitblech wird erreicht, daß der an sich geringere Anteil des Schnittgutes, der am Boden des Windkanals entlang geführt wird, beim Austritt nach oben in den Hauptluftstrom gefördert wird, so daß sich der Windkanal bzw. die Einlaßöffnung nicht allmählich von unten nach oben hin zusetzen kann.

Der Einlauf des Schnittgutes in den Fangkorb wird durch die an der Einalßöffnung angeordneten Schütte gemäß Anspruch 2 erleichtert, die ebenfalls eine Leitwirkung auf den Strom des Schnittgutes ausübt. Weitere zweckmäßige Ausgestaltungen der Erfindung ergeben sich aus den Unteransprüchen 3 bis 5.

Durch die Maßnahme gemäß Anspruch 3 wird erreicht, daß das im Luftstrom geförderte Gras mit Sicherheit bis zu dem Boden der Schütte gelangt, selbst wenn gemäß Anspruch 4 ein Abstand zwischen Leitblech und Boden der Schütte vorhanden ist. Dieser Abstand ist vorteilhaft, weil durch ihn das Schnittgut dann austreten kann wenn der Grasfangkorb gefüllt ist. Das Austreten des Schnittgutes zeigt dann der Bedienungsperson an, daß der Grasfangkorb geleert werden muß.

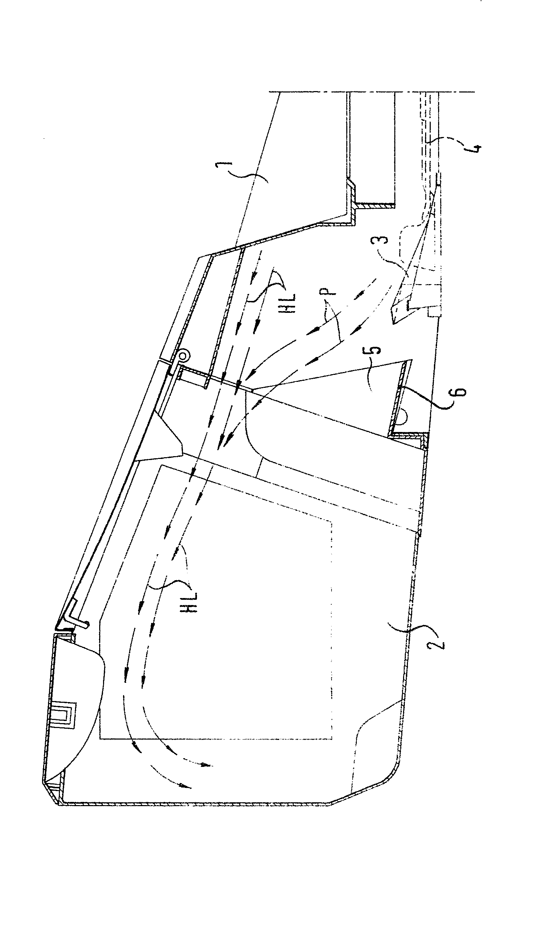

Nachstehend wird ein Ausführungsbeispiel der Erfindung anhand der Zeichnung beschrieben. Die einzige Figur der Zeichnung zeigt einen Vertikalschnitt des Grasfangkorbes und der Luftführung eines erfindungsgemäß ausgebildeten Rasenmähers.

Im unteren Bereich des Windkanals 1 des Rasenmähers ist an der Auswurföffnung ein Leitblech 3 angebracht, das nicht bis an das mit vertikaler Achse rotierende Schneidmesser 4 herangeführt ist. Durch dieses Leitblech 3 werden die im unteren Teil des Chassis befindlichen Schnittgutreste in Richtung der Pfeile P nach oben abgelenkt und in den durch die Pfeile HL gekennzeichneten Hauptluftstrom gefördert,

- 3 -

und von diesem weiter nach hinten in den Fangkorb 2 transportiert, der am Rasenmäher-Chassis angelenkt und wie in der DE-OS 30 33 345 beschrieben und dargestellt, ausgebildet ist. Der Windkanal 1 des Rasenmäher-Chassis ist verhältnismäßig weit nach oben gezogen und durch ihn wird der größte Anteil des Schnittgutes sehr weit oben über den Hauptluftstrom HL in den Fangkorb eingeworfen und lagert sich von hinten aufbauend nach vorne ab. Reste des Schnittgutes können sich jedoch im unteren Berich des Chassis bewegen und könnten, sofern das Leitblech 3 nicht vorhanden wäre, zu einer Verstopfung des Windkanals führen. Die Windkanalführung wird auch dadurch von Schnittgutresten freigehalten, daß am Fangkorb 2 eine Schütte 5 angebracht ist, deren Boden 6 tiefer als das Leitblech 3 liegt, wobei ein Zwischenraum zwischen dem Leitblech 3 und dem Boden 6 der Schütte 5 belassen ist. Der Boden 6 der Schütte 5 liegt tiefer als das Leitblech 3. Wenn der Fangkorb bis zur Vorderkante des Bodens 6 gefüllt ist, fallen Reste des Schnittgutes durch den Zwischenraum zwischen dem Boden 6 und dem Leitblech nach unten auf den Rasen, wodurch die Bedienungsperson auf den Füllstand des Fangkorbes 2 aufmerksam gemacht wird. Beim Aushängen des gefüllten Korbes werden durch die Schütte 5 Schnittgutreste aus der Windkanalöffnung des Chassis mit herausgenommen. Dadurch ist sichergestellt, daß die Auswurföffnung stets freigehalten wird.

0060406

- 1 -

Patentansprüche:

1. Rasenmäher mit Grasfangkorb und einem Windkanal, durch den das Gras in einem durch die rotierenden Messer oder zusätzliche Luftschaufeln erzeugten Luftstrom nach hinten geführt wird,
dadurch gekennzeichnet,
daß der Windkanal (1) am Boden ein Leitblech (3) aufweist, welches nach hinten und oben ansteigend angeordnet ist.

2. Rasenmäher nach Anspruch 1,
dadurch gekennzeichnet,
daß hinter dem Leitblech (3) eine Einlaufschütte (5) des Fangkorbes (2) angeordnet ist.

3. Rasenmäher nach Anspruch 2,
dadurch gekennzeichnet,
daß der Boden (6) der Schütte nach hinten aufsteigend ausgebildet ist und mit seinem Vorderrand im Abstand zum Hinterrand des Leitbleches liegt.

4. Rasenmäher nach Anspruch 3,
dadurch gekennzeichnet,
daß zwischen dem Hinterrand des Leitbleches (3) und dem Vorderrand des Schüttbodens (6) ein eine Überlauföffnung bildender Abstand angeordnet ist.

5. Rasenmäher nach einem der Ansprüche 1 - 4,
dadurch gekennzeichnet,
daß die obere Begrenzungswand des Windkanals (1) an den Oberrand der Einlauföffnung des Fangkorbes anschließt, die dicht unter dem Deckel des Fangkorbes verläuft.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 1 515 966 (SCOTT BONNAR LTD.)<br>* ganzes Dokument *<br>-- | 1-4 |
| A | AU - B - 421 582 (SUNBEAM CORP. LTD.)<br>* Seiten4 bis 5, Zeile 12; Fig. 1 *<br>-- | 1 |
| A | US - A - 3 002 332 (N.C. SHANE)<br>---- | |

**KLASSIFIKATION DER ANMELDUNG (Int. Cl.³)**

A 01 D   53/00

**RECHERCHIERTE SACHGEBIETE (Int. Cl.³)**

A 01 D   35/26
A 01 D   53/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 14-04-1982 | SCHOFER |

EPA form 1503.1   06.78